# EUROPÄISCHE PATENTANMELDUNG

(11) **EP 1 410 731 A1**
(43) Veröffentlichungstag der Anmeldung: **21.04.2004**
(21) Anmeldenummer: 03405733.1
(22) Anmeldetag: 13.10.2003
(51) Int. Cl.: A47B 13/02, A47B 95/00, F16B 12/42, F16B 12/44

(54) **Montagebeschlag mit Bajonettkupplung**

(30) Priorität: 14.10.2002 CH 16952002
(71) Anmelder: Giroflex-Entwicklungs-AG, 5322 Koblenz (CH)
(72) Erfinder: Curiger, Erwin, 5408 Ennetbaden (CH)
(74) Vertreter: EGLI-EUROPEAN PATENT ATTORNEYS

(57) **Zusammenfassung**

Ein Montagebeschlag hat ein erstes Beschlagsteil (1), das zur Befestigung an einem ersten Bauteil, und ein zweites Beschlagsteil (10), das zur Befestigung an einem zweiten Bauteil bestimmt ist. Das erste Beschlagsteil (1) und das zweite Beschlagsteil (10) sind mit Hilfe einer Bajonettkupplung miteinander verbindbar, wobei ein Hülsenteil (2) der Bajonettkupplung im ersten Beschlagsteil (1) und ein Einsteckteil (11) der Bajonettkupplung im zweiten Beschlagsteil (10) ausgebildet ist. Das Einsteckteil (11) hat eine Anzahl radialer Zungen (12). Das Hülsenteil (2) hat eine innere Hülsenöffnung (4) und eine entsprechend der Anzahl Zungen (12) daran radial angeformter Zungenöffnungen (5). Jede radiale Zunge (12) weist mindestens einen Zentriernocken (13) auf, dessen äusserer radialer Abstand von einem Einsteckteilzentrum (14) im Wesentlichen auf einem Kreis liegt und die Ausformung der inneren Hülsenöffnung (4) entspricht zumindest in Teilen im Wesentlichen diesem Kreis.

## Beschreibung

Die Erfindung bezieht sich auf einen Montagebeschlag mit Bajonettkupplung gemäss dem Oberbegriff des Patentanspruchs 1 sowie insbesondere auf dessen Verwendung im Bereich der Befestigung von Möbelteilen gemäss Patentanspruch 7.

Es gibt viele Anwendungsbereiche, in denen verschiedene Bauteile anhand unterschiedlichster momentaner Anforderungen möglichst schnell und möglichst ohne Einsatz von Werkzeugen zu einer bedarfsgerechten Einheit zusammenfügbar sein müssen.

Einer dieser Anwendungsbereiche ist beispielsweise die Möblierung von Restaurants und Konferenzräumen etc., bei denen manchmal in kurzer Zeit auf eine oft sehr unterschiedliche Anzahl von Besuchern reagiert und eine entsprechende Möblierung bereitgestellt werden muss. Oft muss dann in kurzer Zeit eine Anzahl weitere Tische bereitgestellt werden, die aber ihrerseits aus Platzgründen oft in demontiertem Zustand gelagert werden. Schnellmontagesysteme wie Bajonettverschlüsse zur Befestigung von Möbelteilen und insbesondere auch Tischbeinen sind deshalb grundsätzlich bereits bekannt. Gängige und insbesondere konstruktiv einfache Lösungen haben aber oft den Nachteil, dass sie wenig genau und auch wenig stabil sind.

Aus der US-6 047 648 ist ein Montagebeschlag mit einer Bajonettkupplung für die Anbringung von Tischbeinen an Tischplatten bekannt. Dieser Montagebeschlag besteht aus einem Beinanbringungsteil, das zur Befestigung an einem Tischbein bestimmt ist, sowie einer Tischplattenanbringung, die zur Befestigung an einer Tischplatte bestimmt ist. Das Beinanbringungsteil und die Tischplattenanbringung können mit Hilfe einer Bajonettkupplung miteinander verbunden werden.

Dabei ist an der Tischplattenanbringung ein Hülsenteil und am Beinanbringungsteil ein Einsteckteil ausgebildet.

Das Einsteckteil weist vier radiale Zungen auf und das Hülsenteil hat einen Hohlraum und eine Öffnung, die in ihrer Form den vier radialen Zungen des Einsteckteiles entspricht und eine Einführung der Zungen des Einsteckteiles in den Hohlraum ermöglicht. Durch Verdrehung des Einsteckteiles gegenüber dem Hülsenteil im Hohlraum wird die Bajonettkupplung zwischen dem Einsteckteil und dem Hülsenteil wirksam. Die Stabilität im gekuppelten Zustand kommt im Wesentlichen durch die Wirkung eines Kraftschlusses zwischen der Tischplattenanbringung und dem Beinanbringungsteil zustande. Da die Einführung des Einsteckteiles in den Hülsenteil leichtgängig erfolgen muss, kann mit dieser Lösung nur eine geringe Zentrierungsgenauigkeit erreicht werden.

Hier versucht die vorliegende Erfindung eine Verbesserung zu erreichen. Ziel der Erfindung ist es, einen Montagebeschlag mit einer Bajonettkupplung anzugeben, der eine genauere Zentrierung der beiden zu kuppelnden Beschlagsteile ermöglicht.

Diese Aufgabe wird durch die Merkmale des Patentanspruchs 1 gelöst.

Bei einem gattungsgemässen Montagebeschlag mit einem Einsteckteil mit einer Anzahl radialer Zungen und einem Hülsenteil mit einer inneren Hülsenöffnung und einer der Anzahl radialer Zungen entsprechenden Anzahl daran angeformter Zungenöffnungen, weist jede radiale Zunge mindestens einen Zentriernocken auf.

Der äussere radiale Abstand des Zentriernockens von einem Zentrum des Hülsenteils liegt im Wesentlichen auf einem Kreis und die Ausformung der inneren Hülsenöffnung entspricht zumindest in Teilen im Wesentlichen diesem Kreis. Im gekuppelten Zustand liegen die Zentriernocken an den im Wesentlichen kreisförmigen Ausformungen der inneren Hülsenöffnung an und zentrieren und halten den Einsteckteil.

Die Vorteile dieser Anordnung liegen insbesondere darin, dass die Zentrierungsgenauigkeit wesentlich verbessert wird. Trotzdem kann bei dieser Konstruktionsweise der Einsteckteil sehr leicht in den Hohlraum des Hülsenteiles eingesetzt werden, weil für die Zungenöffnungen am ersten Beschlagsteil sehr grosszügige Ausnehmungstoleranzen anwendbar sind. Durch anschliessendes Verdrehen des Einsteckteiles gegenüber dem Hülsenteil gelangen die Zungen des Einsteckteiles in Eingriff mit dem Hülsenteil und durch diese Verdrehbewegung wird der Einsteckteil auch in der oben beschriebenen Weise zunehmend zentriert.

Weitere Vorteile liegen darin, dass sowohl das Hülsenteil als auch das Einsteckteil im Wesentlichen sehr flach, einstückig und damit auch kostengünstig herstellbar sind.

Durch die Verwendung von je zwei Zentriernocken pro Zunge kann die Stabilität weiter verbessert werden. Ebenso besteht die Möglichkeit, durch einen teilweisen im Wesentlichen leicht spiralförmigen Kurvenverlauf der Ausformung der inneren Hülsenöffnung eine mit zunehmender Verdrehung zunehmend bessere Zentrierung zu erreichen.

Im weiteren können die radialen Zungen an ihren Aussenrändern mit je einer radialen Einkerbung und der Hülsenteil mit einer federnden Einrastvorrichtung dazu versehen sein. Dabei kann am Hülsenteil ein Auslösehebel mit einem Einrastnocken angebracht sein, wobei der Einrastnocken in der gekuppelten Stellung des Montagebeschlages in die radialen Einkerbungen der Zungen eingreift und eine Verdrehungssicherung bewirkt.

Somit kann auf einfache Weise der Montagebeschlag auch gegen unbeabsichtigtes Lösen gesichert werden.

Durch eine im Wesentlichen dreieckförmige Formgebung des Beschlagsteiles mit dem integrierten Hülsenteil werden gute Montagemöglichkeiten bei vergleichbar relativ geringem Gewicht erreicht. Beide Beschlagsteile können z. B. durch Schraubverbindungen an den jeweiligen Bauteilen befestigt werden, wobei zusätzlich und nach Bedarf noch ein Verdrehschutz vorgesehen sein kann.

Die Anwendungen des erfindungsgemässen Montagebeschlages erlauben sehr vielseitige Einsatzmöglichkeiten. Denkbar sind verschiedenste allgemeine Anwendungen, bei denen Bauteile anhand unterschiedlichster momentaner Anforderungen möglichst schnell und möglichst ohne Einsatz von Werkzeugen zu einer bedarfsgerechten und präzis orientierten und stabilen Einheit zusammenfügbar sein müssen. Derartige Anwendungsmöglichkeiten umfassen beispielsweise:
- die Zusammenstellung von Messe- und Ausstellungsbauten
- Regale
- Halterungen für Absperrungen etc.
- die Befestigung von Möbelteilen
- die Befestigung von Tischbeinen an Tischplatten
- Campingmöbel
- transportable Marktstände
- generell für Stützen und Teilen an Flächenelementen usw.

Weitere Anwendungen sind möglich, wenn eine proportionale Verkleinerung aller Teile in Betracht gezogen wird.

Kombinationsmöglichkeiten bestehen im Bereich der Befestigung von Möbelteilen auch insofern, dass die erfindungsgemässen Montagebeschläge mit Zusatzteilen kombiniert werden können, mit denen beispielsweise Tischplatten in einer Weise aneinandergereiht werden können, dass an den Trennstellen zwei oder mehr Tischplatten von einem einzigen Tischbein getragen werden.

Im Folgenden wird die Erfindung anhand von Zeichnungen anhand eines Beispiels für den Einsatz zur Befestigung von Tischbeinen an Tischplatten näher beschrieben. Es zeigen
- Fig. 1: ein in einem ersten Beschlagsteil ausgebildetes Hülsenteil
- Fig. 2: ein in einem zweiten Beschlagsteil ausgebildetes Einsteckteil

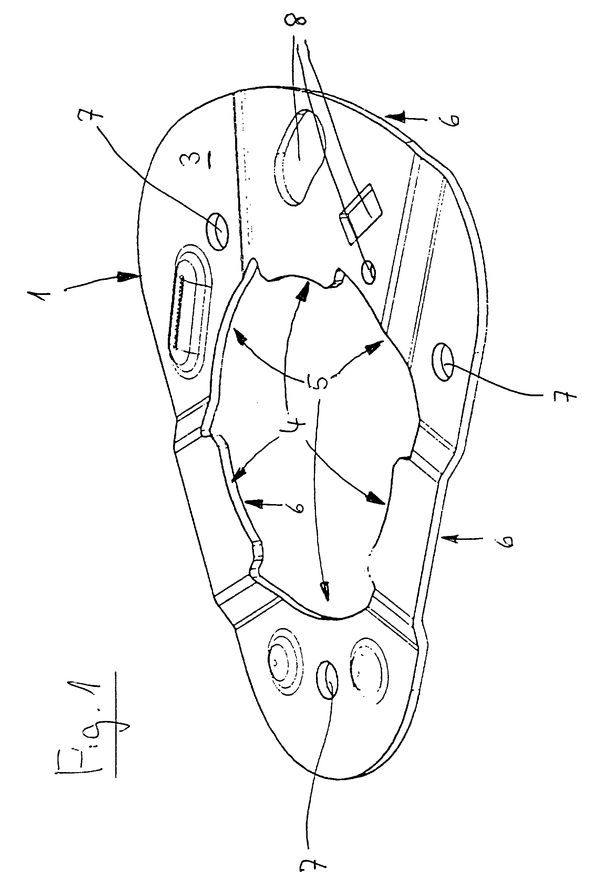

Die Figur 1 zeigt ein erstes Beschlagsteil 1 mit einem daran ausgebildeten Hülsenteil 2. Das erste Beschlagsteil 1 besteht im Wesentlichen aus einer einstückigen, im Wesentlichen flachen und im gezeigten Anwendungsbeispiel annähernd dreieckigen Grundplatte 3. Die Grundplatte 3 hat eine im Wesentlichen kreisförmige innere Hülsenöffnung 4 und drei nach aussen radiale angeformte Zungenöffnungen 5. In einem Bereich der Grundplatte 3, der im Wesentlichen nicht demjenigen entspricht, der von den angeformten Zungenöffnungen 5 erfasst ist, ist die Grundplatte 3 abgebogen erhöht, wodurch gewissermassen eine Art Hohlraum 6 entsteht. Unter dem am ersten Beschlagsteil 1 ausgebildeten Hülsenteil 2 ist somit derjenige Bereich zu verstehen, der von der inneren Hülsenöffnung 4 der Grundplatte 3, den Zungenöffnungen 5 und dem in diesem Bereich durch die Abbiegung der Grundplatte 3 entstandene Hohlraum 6 gebildet wird. Das erste Beschlagsteil 1 weist zudem Befestigungslöcher 7 sowie Löcher 8 zur Anbringung einer (nicht dargestellten) Einrastvorrichtung auf.

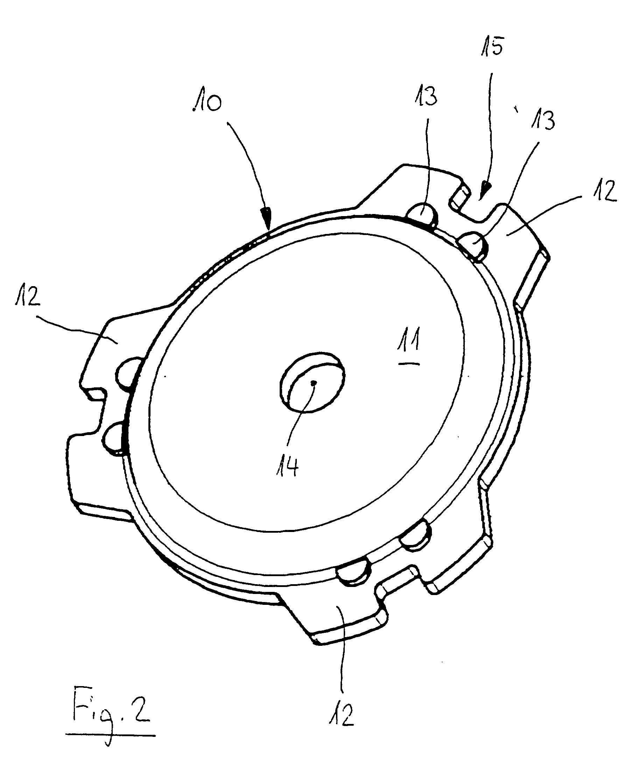

Die Figur 2 zeigt ein zweites Beschlagsteil 10 mit einem daran ausgebildeten Einsteckteil 11. Das zweite Beschlagsteil 10 ist im Wesentlichen flach und rund und weist drei sich radial nach aussen erstreckende Zungen 12 auf. Die Zungenöffnungen 5 des ersten Beschlagsteils 1 sind mit einer grossen Ausnehmungstoleranz so bemessen, dass das zweite Beschlagsteil mit den Zungen 12 sehr leicht in den Hohlraum 6 des Hülsenteiles 2 eingeführt werden kann.

Jede radiale Zunge 12 weist auf ihrer Oberseite (derjenigen Seite, die bei der Einführung des Einsteckteils 11 in den Hülsenteil 2 dem Hülsenteil abgewandt ist) zwei Zentriernocken 13 auf, deren äussere radiale Abstände von einem Einsteckteilzentrum 14 im Wesentlichen auf einem Kreis liegen. Die Zungen 12 sind vorzugsweise mit radialen Einkerbungen 15 versehen, die zur Aufnahme von (nicht dargestellten) Einrastnocken einer vorzugsweise (ebenfalls nicht dargestellten) federnden Einrastvorrichtung ausgebildet sind. Einrastvorrichtungen, mit denen auf einfache Weise Montagebeschläge gegen unbeabsichtigtes Lösen gesichert werden können, sind einschlägig bekannt und deshalb nicht weiter erläutert. Dies trifft auch für Hebelvorrichtungen zu, mit denen derartige Einrastvorrichtungen auf einfache Weise wieder gelöst werden können.

Zur Verbindung des ersten Beschlagsteiles 1 mit dem zweiten Beschlagsteil 10 mit der Bajonettkupplung (die vom Hülsenteil 2 und vom Einsteckteil 11 gebildet ist) wird das Einsteckteil 11 des zweiten Beschlagsteils 10 zunächst in die von der inneren Hülsenöffnung 4 und den Zungenöffnungen 5 gebildete Öffnung eingeführt. Dies ist wegen der grossen Ausnehmungstoleranzen der Zungenöffnungen 5 sehr leicht möglich. Anschliessend wird das zweite Beschlagsteil 10 gegenüber dem ersten Beschlagsteil 1 verdreht. Dabei schieben sich die Zungen 12 des zweiten Beschlagsteils 10 in die Hohlräume 6 unter diejenigen Teile der Grundplatte 3, die im Bereich der inneren Hülsenöffnungen 4 liegen. Gleichzeitig gelangen die äusseren Berührungsflächen der Zentriernocken 13 des zweiten Beschlagsteils 10 in Kontakt mit der Berührungsfläche der inneren Hülsenöffnung 4 des ersten Beschlagsteils 1. Dadurch erfolgt eine genaue Zentrierung des ersten Beschlagsteils 1 gegenüber dem zweiten Beschlagsteil 10. Bei eingerasteter Bajonettkupplung erhält man eine genau zentrierte und in drei Achsen fixierte feste Verbindung zwischen dem ersten Beschlagsteil 1 und dem zweiten Beschlagsteil 10.

Der äussere radiale Abstand des (mindestens einen) Zentriernockens 13 pro Zunge 12 von einem Einsteckteilzentrum 14 liegt im Wesentlichen auf einem Kreis und die Ausformung der inneren Hülsenöffnung 4 entspricht zumindest in Teilen im Wesentlichen diesem Kreis. Im gekuppelten Zustand liegen die Zentriernocken 13 an den im Wesentlichen kreisförmigen Ausformungen der inneren Hülsenöffnung 4 an und zentrieren und halten den Einsteckteil 11.

Die Ausformung der inneren Hülsenöffnung 4 kann zumindest in Teilen im Wesentlichen auch einem leicht spiralförmigen oder spiralähnlichen Kurvenverlauf entsprechen, der sich dem Kreis annähert. Dadurch wird der Übergang bei der Befestigung des Einsteckteils 11 am Hülsenteil 2 weiter erleichtert.

Insgesamt wird dank der flachen Ausbildung des ersten und des zweiten Beschlagsteiles (1, 10) eine sehr geringe Bauhöhe des erfindungsgemässen Montagebeschlags erzielt, was bei der Stapelung von Bauteilen, die mit solchen Beschlagsteilen versehen sind, hinsichtlich des Platzbedarfs ebenfalls vorteilhaft ist.

### Bezugsziffernliste:

- 1: erstes Beschlagsteil
- 2: Hülsenteil
- 3: Grundplatte
- 4: innere Hülsenöffnung
- 5: Zungenöffnung
- 6: Hohlraum
- 7: Befestigungsloch
- 8: Löcher

- 10: zweites Beschlagsteil
- 11: Einsteckteil
- 12: Zunge
- 13: Zentriernocken
- 14: Einsteckteilzentrum
- 15: Einkerbung

## Patentansprüche

1. Montagebeschlag, der ein erstes Beschlagsteil (1), das zur Befestigung an einem ersten Bauteil, und ein zweites Beschlagsteil (10), das zur Befestigung an einem zweiten Bauteil bestimmt ist, umfasst, wobei das erste Beschlagsteil (1) und das zweite Beschlagsteil (10) mit Hilfe einer Bajonettkupplung miteinander verbunden werden können, deren Hülsenteil (2) im ersten Beschlagsteil (1) ausgebildet ist und deren Einsteckteil (11) im zweiten Beschlagsteil (10) ausgebildet ist, und wobei
- das Einsteckteil (11) mit einer Anzahl radialer Zungen (12) und
- das Hülsenteil (2) mit einer inneren Hülsenöffnung (4) und einer der Anzahl radialer Zungen (12) entsprechenden Anzahl daran angeformter Zungenöffnungen (5) versehen ist,
**dadurch gekennzeichnet, dass** jede radiale Zunge (12) mindestens einen Zentriernocken (13) aufweist, dessen äusserer radialer Abstand von einem Einsteckteilzentrum (14) im Wesentlichen auf einem Kreis liegt und die Ausformung der inneren Hülsenöffnung (4) zumindest in Teilen im Wesentlichen diesem Kreis entspricht.

2. Montagebeschlag nach Patentanspruch 1, **dadurch gekennzeichnet, dass** jede radiale Zunge (12) zwei Zentriernocken (13) aufweist, deren äussere radiale Abstände vom Einsteckteilzentrum (14) im Wesentlichen auf dem Kreis liegen.

3. Montagebeschlag nach Patentanspruch 1 oder 2, **dadurch gekennzeichnet, dass** die Ausformung der inneren Hülsenöffnung (4) zumindest in Teilen im Wesentlichen einem leicht spiralförmigen oder spiralähnlichen Kurvenverlauf, der sich dem Kreis annähert, entspricht.

4. Montagebeschlag nach einem der Patentansprüche 1 bis 3, **dadurch gekennzeichnet, dass** die radialen Zungen (12) an ihren Aussenrändern je eine radiale Einkerbung (15) aufweisen.

5. Montagebeschlag nach Patentanspruch 4, **dadurch gekennzeichnet, dass** am Hülsenteil (2) eine federnde Einrastvorrichtung mit einem Auslösehebel und einem Einrastnocken angebracht ist, wobei der Einrastnocken zum Einrasten in die radialen Einkerbungen (15) der Zungen (12) ausgebildet ist.

6. Montagebeschlag nach einem der Patentansprüche 1 bis 5, **dadurch gekennzeichnet, dass** das Hülsenteil (2) und das Einsteckteil (11) im verkuppelten Zustand eine zentrierte und in drei Achsen fixierte feste Verbindung zwischen dem ersten Beschlagsteil (1) und dem zweiten Beschlagsteil (10), bzw. zwischen dem ersten Bauteil und dem zweiten Bauteil bildet.

7. Montagebeschlag nach einem der Patentansprüche 1 bis 6, **dadurch gekennzeichnet, dass** der Montagebeschlag mit Zusatz- oder Zwischenteilen kombinierbar ist, mit dem neben dem ersten und dem zweiten Bauteil benachbarte weitere Bauteile verbindbar sind.

8. Verwendung des Montagebeschlags nach einem der Patentansprüche 1 bis 7 zur Befestigung von Möbelteilen.

9. Verwendung des Montagebeschlags nach Patentanspruch 8 zur Befestigung von Tischbeinen an Tischplatten.
